## Europäisches Patentamt

(19) **European Patent Office**

**Office européen des brevets**

(11) Numéro de publication: **0 134 740**

**B1**

(12) # FASCICULE DE BREVET EUROPÉEN

(45) Date de publication du fascicule du brevet:
12.07.89

(51) Int. Cl.⁴: **A 01 B 29/04**

(21) Numéro de dépôt: **84401649.3**

(22) Date de dépôt: **08.08.84**

(54) **Rouleaux de compactage.**

(30) Priorité: **09.09.83 FR 8314382**

(43) Date de publication de la demande:
**20.03.85 Bulletin 85/12**

(45) Mention de la délivrance du brevet:
**12.07.89 Bulletin 89/28**

(84) Etats contractants désignés:
**DE IT**

(56) Documents cité:
**FR-A-2 281 050**
**US-A-1 497 779**
**US-A-1 798 393**
**US-A-2 126 909**
**US-A-2 426 482**

(73) Titulaire: **LELY FRANCE (Société à Responsabilité Limitée), Km 4- Route de Paris, Valframbert F-61004 Alencon Cedex (FR)**

(72) Inventeur: **Damonneville, François, Bourbon, F-61250 Danigni (FR)**
Inventeur: **Rambach, Célestin, Route Nationale 19, F-10140 Vandoeuvre- sur- Barse (FR)**

(74) Mandataire: **Loyer, Bertrand, Cabinet Pierre Loyer 77, rue Boissière, F-75116 Paris (FR)**

LIBER, STOCKHOLM 1989

EP 0 134 740 B1

## Description

La présente invention est relative à un rouleau de compactage, du type appelé "Paker", c'est-à-dire comportant une pluralité de couronnes parallèles de dents, ces dents étant angulairement décalées d'une couronne à l'autre.

Les rouleaux de ce genre sont constitués par un cylindre, de gros diamètre, sur lequel les dents sont mises en place, soit en les soudant une par une sur la surface du cylindre, soit en enfilant sur le cylindre des couronnes de dents, qui sont ensuite fixées en position par soudure, la fabrication de tels rouleaux est onéreuse et il en résulte que ces rouleaux sont très chers. En outre, il se produit très souvent que ces rouleaux se bourrent de terre qui se coince entre les couronnes de dents, de sorte que celles-ci finissent par être noyées dans une gangue de terre. Ce problème est tellement délicat que de nombreux brevets ont été déposés pour couvrir des décrottoirs efficaces pour ce type de rouleau; mais aucune de ces solutions n'est vraiment efficace.

De tels rouleaux sont décrits notamment dans le brevet français no 2.281.050.

Pour faciliter le décollement de la terre, on a proposé de donner auxdites dents une forme telle que, vues de profil, elles aient deux arêtes rectilignes l'une étant pratiquement radiale et l'autre pratiquement tangentielle.

Il est d'autre part connu de fabriquer les rouleaux du type "Cultipaker" ou "Crosskill" en enfilant sur un arbre une pluralité de disques de fonte, creux, ayant un profil approprié.

De tels rouleaux sont décrits dans le brevet US no 2.126.909.

La demanderesse s'est aperçue que cette technique de fabrication permettait de réaliser des rouleaux "Paker" plus performants que ceux existant actuellement et cela à un prix inférieur.

Le rouleau selon la présente invention est constitué par enfilage sur un arbre d'une pluralité d'éléments modulaires, similaires, creux, obtenus par moulage, chaque élément modulaire comportant d'une part deux parois circulaires convergeant l'une vers l'autre et d'autre part, dans le plan de convergence desdites parois une pluralité de dents dont les parois sont convergentes, caractérisé par le fait que les parois circulaires convergentes sont à section droite, lesdites sections droites faisant entre elles un angle obtus d'environ 140° ± 10° les parois latérales convergentes des dents étant également à section droite, lesdites sections droites faisant entre elles un angle d'environ 10° ± 5° et ayant un profil latéral connu du type "Paker" de façon que les dents et les parois d'ou elles prennent naissance, présentent une forme facilitant le décollement de la terre.

De préférence, les parois des dents font entre elles un angle d'environ 10°.

A titre d'exemple non limitatif et pour faciliter la compréhension de l'invention, on a représenté aux dessins annexés:

Fig. 1    une vue en élévation latérale d'un élément modulaire dont est formé le rouleau;

Fig. 2    une vue partielle en coupe selon A-A de la figure 1;

Fig. 3    une vue partielle en coupe selon B-B de la figure 1;

Fig. 4    une vue en coupe longitudinale d'un rouleau réalisé avec des éléments selon la figure 1;

Fig. 5    une vue partielle illustrant de façon schématique le montage des éléments râcleurs.

En se reportant à ces figures, on voit que le rouleau est constitué par une pluralité d'éléments modulaires 1, qui sont creux et obtenus par moulage et qui sont enfilés sur un arbre porteur 2.

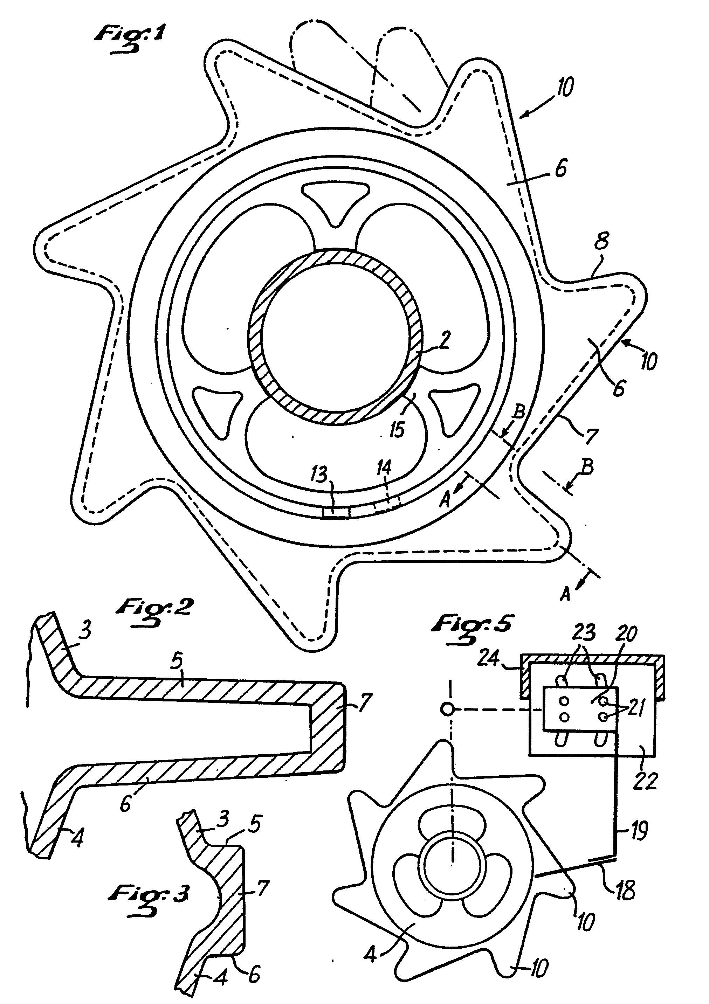

Chaque élément 1 est rond et comporte deux parois convergentes 3 et 4 qui, dans l'exemple représenté, font entre elles un angle de 140°. Ces deux parois sont symétriques et leurs prolongements se coupent selon un plan vertical XY. A leurs extrémités 3a et 4a les plus proches de ce plan XY sont ménagées des dents 10, au nombre de sept dans l'exemple représenté (figure 1). Comme cela est connu en soi, chaque dent 10, vue de profil, comporte une arête oblique 7 et une arête radiale 8. La pente de l'arête oblique 7 est telle que lorsqu'une dent 10 entre en contact avec le sol, elle soit pratiquement horizontale. Les parois latérales 5 et 6 des dents 10 sont légèrement convergentes. Dans l'exemple représenté, chacune fait un angle de 5° avec le plan médian XY et elles font donc un angle de 10° entre elles.

La paroi 3 comporte à son autre extrémité 3b un épaulement circulaire 11 dans lequel vient s'encastrer le rebord circulaire 12 ménagé à l'extrémité de la paroi 4 de l'élément 1 adjacent.

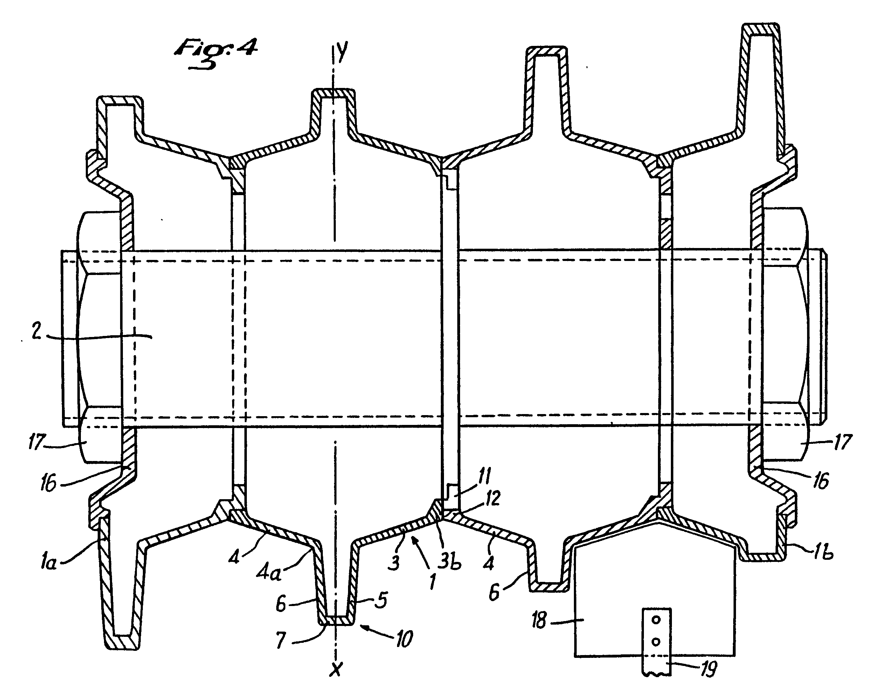

Les deux parois latérales 5 et 6 des dents 10 aboutissent aux parois 7 et 8. A la naissance de la dent (figure 3), ces parois 5 et 6 ont une toute petite longueur et leur longueur est maximum à la pointe de la dent (figure 2).

De préférence, comme cela est représenté figure 2, l'épaisseur de la paroi 7 est plus grande à l'extrémité de la dent qu'à son début.

Comme cela est représenté à la figure 1, les dents 10 étant au nombre de 7 sont décalées les unes des autres de 51,26°. D'autre part, d'un élément à l'autre, les dents doivent être décalées pour être disposées selon une hélice. Selon la présente demande cela est obtenu en ménageant dans l'épaulement circulaire 11 des encoches 13 et dans le rebord circulaire 12 des doigts 14 de même forme, ces doigts 14 venant s'engager dans les encoches 13 pour positionner angulairement les divers éléments 1 avec le décalage désiré.

Dans l'exemple représenté, le décalage est tel qu'il y ait trois dents d'une position à l'autre et donc que d'un élément à l'autre le décalage soit de 17,8°. En conséquence, les doigts 14 sont décalés de 17,8° par rapport à la position des encoches 13 comme cela est représenté à la figure 1.

On obtient ainsi très facilement au montage le décalage désiré, ce qui simplifie considérablement les opérations de fabrication et abaisse le prix de revient.

Comme cela est représenté, le calage de chaque élément 1 sur l'arbre 2 est obtenu par trois portées 15.

Les éléments sont maintenus emboîtés les uns dans les autres et enfilés sur l'arbre 2 au moyen de deux demi-éléments symétriques inverses 1a et 1b qui prennent appui contre deux flasques circulaires 16, chacun d'eux étant tenu par un écrou 17.

Du fait que les deux parois 5 et 6 sont légèrement convergentes, elles présentent une dépouille et la terre s'en dégage beaucoup plus facilement. Le fait que les deux parois 3 et 4 soient aussi convergentes facilite également le décollement de la terre. Il est cependant préférable de prévoir des râcleurs tels que représentés en 18 à la figure 4. Ces râcleurs comportent une pointe puisque les parois 3 et 4 de deux éléments adjacents définissent un creux et ce fait a pour résultat que l'effet de freinage provoqué par les éléments 18 est moindre.

En se reportant à la figure 4, on voit que chaque râcleur 18 est porté par un support 19 solidaire d'une plaque 20 munie de deux paires d'orifices 21, chaque paire correspondant à une fenêtre courbe 23, les deux fenêtres 23 étant parallèles et pratiquées dans une plaque 22, les plaques 22 étant portées par une poutre transversale en U inversé 24. Les orifices 21 et rainures 23 laissent passer des boulons et écrous de serrage.

Les rayons de courbures des fenêtres 23 sont égaux entre eux et égaux au rayon de courbe des éléments 1. Il en résulte que lorsqu'on déplace la plaque 20 par rapport à la plaque 22, le râcleur correspondant se déplace le long de la courbure des éléments sans s'en écarter.

Dans l'exemple représenté, les parois 3 et 4 font entre elles un angle de 140°, mais cet angle peut être compris entre 90° et 160°. De même, les parois 5 et 6 font un angle de 10°, mais cet angle peut être compris entre 5 et 40°.

De même dans l'exemple représenté, chaque élément modulaire 1 comporte sept dents, mais il est bien évident que l'invention n'est pas limitée à ce cas particulier le nombre de dents 10 pouvant être inférieur ou supérieur.

**Revendications**

1. Rouleau de compactage constitué par enfilage sur un arbre d'une pluralité d'éléments modulaires (1), similaires, creux, obtenus par moulage, chaque élément modulaire (1) comportant d'une part deux parois circulaires convergeant (3, 4) l'une vers l'autre et d'autre part, dans le plan de convergence desdites parois une pluralité de dents (10) dont les parois (5, 6) sont convergentes, caractérisé par le fait que les parois circulaires convergentes (3, 4) sont à section droite, lesdites sections droites faisant entre elles un angle obtus d'environ 140° ± 10°; les parois latérales convergentes (5, 6) des dents (10) étant également à section droite, lesdites sections droites faisant entre elles un angle d'environ 10° ± 5° et ayant un profil latéral connu du type "Paker"; de façon que les dents (10) et les parois (3, 4) d'où elles prennent naissance, présentent une forme facilitant le décollement de la terre.

2. Rouleau de compactage selon la revendication 1, dans lequel chaque élément modulaire (1) est décalé angulairement par rapport à celui qui le précède.

3. Rouleau selon la revendication 2, dans lequel chaque élément modulaire (1) comporte une encoche (13) et un doigt de positionnement (14) qui sont décalés l'un par rapport à l'autre d'un angle qui détermine le décalage des éléments (1) les uns par rapport aux autres.

4. Rouleau selon l'une quelconque des revendications précédentes, dans lequel chaque élément (1) comporte deux faces symétriques par rapport au plan médian (XY) l'une comportant un épaulement circulaire femelle (11) et l'autre un rebord circulaire mâle (12) de telle sorte que les éléments (1) s'emboîtent les uns dans les autres.

5. Rouleau selon l'une quelconque des revendications précédentes, dans lequel l'ensemble d'éléments modulaires (1) enfilés sur l'arbre (2) comporte à chaque extrémité un demi-élément (1a, 1b) contre lequel s'emboîte un flasque (16) serré par un écrou (17) vissé sur l'arbre (2).

6. Rouleau selon l'une quelconque des revendications précédentes, dans lequel chaque dent (10) a, vue de profil, une arête radiale (8) et une arête oblique (7), l'épaisseur de la paroi de la dent le long de cette arête étant plus épaisse au sommet de la dent (10) qu'à sa naissance.

7. Rouleau selon l'une quelconque des revendications précédentes, dans lequel chaque élément modulaire (1) comporte sept dents (10), le décalage angulaire entre les dents (10) de deux éléments voisins étant du tiers du décalage angulaire entre deux dents (10) d'un même élément.

8. Rouleau selon l'une quelconque des revendications précédentes, caractérisé par le fait qu'il comporte, entre deux rangées de dents (10) de deux éléments modulaires (1) adjacents, un élément râcleur pointu (18).

9. Rouleau selon la revendication 8, dans lequel chaque élément râcleur pointu (18) est porté par un support (19), chaque support étant porté par une poutre transversale (24) par des moyens permettant à chaque râcleur (18) de suivre le contour du rouleau quand on le change de position.

## Patentansprüche

1. Verdichtungswalze, die durch Aufziehen einer Vielzahl von modularen, ähnlichen, hohlen, durch Guß erzeugten Elementen (1) ausgebildet ist, wobei jedes modulare Element (1) einerseits zwei kreisförmige, gegeneinander konvergierende Wände (3, 4) sowie andererseits in der Konvergenzebene dieser Wände eine Mehrzahl von Zähnen (10) aufweist, deren Wände (5, 6) zueinander konvergieren, dadurch gekennzeichnet, daß die kreisförmigen, konvergierenden Wände (3, 4) im Schnitt gerade verlaufen, wobei diese geraden Schnittverläufe zwischen sich einen stumpfen Winkel von etwa 140° ± 10° einschließen, und daß die konvergierenden Seitenwände (5, 6) der Zähne (10) ebenfalls im Schnitt gerade verlaufen, wobei ihre geraden Schnittverläufe zwischen sich einen Winkel von etwa 10° ± 5° einschließen und ein bekanntes Seitenprofil des "Packer"-Typs aufweisen derart, daß die Zähne (10) und die Wände (3, 4), von denen die Zähne ausgehen, eine Form ausbilden, die das Ablösen von Erde erleichtert.

2. Verdichtungswalze nach Anspruch 1, bei der jedes modulare Element (1) relativ zum vorhergehenden Element in Winkelrichtung versetzt ist.

3. Walze nach Anspruch 2, bei der jedes modulare Element (1) eine Zapfenaufnahme (13) und einen Positionierzapfen (14) aufweist, die zueinander um einen Winkel versetzt angebracht sind, der den Versatz der Elemente (1) relativ zueinander festlegt.

4. Walze nach einem der vorhergehenden Ansprüche, bei der jedes Element (1) mit zwei relativ zur Mittelebene (XY) symmetrischen Stirnflächen versehen ist, deren eine einen ringförmigen Aufnahmeabsatz (11) und deren andere einen ringförmigen Aufsteckrand (12) derart aufweisen, daß die Elemente (1) gegenseitig ineinander einsteckbar sind.

5. Walze nach einem der vorhergehenden Ansprüche, bei der die Gesamtheit der auf die Welle (2) aufgezogenen modularen Elemente (1) an jedem Ende ein Halbelement (1a, 1b) aufweist, gegen das sich eine Abdeckscheibe (16) anlegt, die von einer auf die Achse (2) aufgeschraubten Mutter (17) verspannt wird.

6. Walze nach einem der vorhergehenden Ansprüche, bei der jeder Zahn (10) - im Profil gesehen - eine radiale Kante (8) und eine schräg verlaufende Kante (7) aufweist, wobei die Wanddicke des Zahnes längs dieser Kante am Gipfel des Zahnes (10) stärker als am Zahnfuß ist.

7. Walze nach einem der vorhergehenden Ansprüche, bei der jedes modulare Element (1) sieben Zähne (10) trägt, wobei der Winkelversatz zwischen den Zähnen (10) zweier benachbarter Elemente ein Drittel des Winkelversatzes zwischen zwei Zähnen (10) auf demselben Element beträgt.

8. Walze nach einem der vorhergehenden Ansprüche, dadurch gekennzeichnet, daß zwischen zwei Reihen von Zähnen (10) zweier benachbarter modularer Elemente (1) ein in einer Spitze zulaufendes Abstreifelement (18) vorgesehen ist.

9. Walze nach Anspruch 8, bei der jedes in einer Spitze zulaufende Abstreifelement (18) von einer Stütze (19) gehaltert und jede Stütze von einem Querträger (24) über Mittel getragen ist, die es jedem Abstreifer (18) ermöglichen, der Walzenkontur zu folgen, wenn man deren Lage ändert.

## Claims

1. A soil-compacting roller formed by slipping onto a shaft a plurality of similar hollow modular elements (1) obtained by casting, each modular element (1) comprising two circular base walls (3, 4) converging towards each other, and a plurality of teeth (10) arranged about the plane of convergence of said base walls, the walls (5, 6) of said teeth being convergent, characterized in that the convergent circular base walls (3, 4) each have a rectilinear section, the said rectilinear sections of said base walls (3, 4) forming together an obtuse angle of approximately 140° ± 10°, each of the two convergent side walls (5, 6) of the teeth (10) also having a rectilinear section, said rectilinear sections of said teeth forming together an angle of approximately 10° ± 5° and having a lateral profile of the type known as "packer", in such manner that the teeth (10) and the base walls (3, 4) from which they originate present a shape appropriate for facilitating the removal of earth adhering thereto.

2. A soil-compacting roller according to Claim 1, wherein each modular element (1) is angularly offset with respect to the preceding one.

3. A roller according to claim 2, wherein each modular element (1) has a recess (13) and a positioning lug (14) which are offset from one another by an angle which determines the offset of modular elements (1) from one to the next adjacent ones.

4. A roller according to any of the preceding Claims, wherein each modular element (1) comprises two faces which are symmetrical about the median plane (XY), one face comprising a circular female shoulder (11) and the other face comprising a circular male rim (12) so that the modular elements (1) fit into each other.

5. A roller according to any of the preceding Claims, wherein the set of modular elements (1) slipped onto the shaft (2) comprises on each end one half-element (1a, 1b) against which is fitted a retainer disk (16) tightened by a nut (17) screwed onto the shaft (2).

6. A roller according to any of the preceding Claims, wherein each tooth (10) has, when seen along its profile, a radial ridge (8) and a slanting ridge (7), the thickness of the tooth wall along the latter ridge (7) being greater at the top of the tooth (10) than in its root part.

7. A roller according to any of the preceding Claims, wherein each modular element (1) comprises seven teeth (10), the angular offset between the teeth (10) of two adjacent elements being one third of the angular offset between two teeth (10) of one same element.

8. A roller according to any of the preceding Claims, characterized in that it comprises, between two rows of teeth (10) of two adjacent modular elements (1) a pointed scraper member (18).

9. A roller according to Claim 8, wherein each pointed scraper member (18) is carried by a support (19), each support being carried by a transverse beam (24) with the help of means allowing each scraper member (18) to follow the outline of the roller whenever its position is modified.

EP 0 134 740 B1

Fig. 1

Fig. 2

Fig. 3

Fig. 5

1

Fig. 4